# EUROPÄISCHE PATENTANMELDUNG

(11) **EP 1 350 457 A2**
(43) Veröffentlichungstag der Anmeldung: **08.10.2003**
(21) Anmeldenummer: 03006333.3
(22) Anmeldetag: 20.03.2003
(51) Int. Cl.: A47L 9/14

(54) **Haushalt-Staubsauger mit einem Filterbeutel, sowie Set von Filterbeuteln**

(30) Priorität: 25.03.2002 DE 10213226; 24.06.2002 DE 10228034
(71) Anmelder: Vorwerk & Co. Interholding GmbH, 42275 Wuppertal (DE)
(72) Erfinder: Rodermann, Thomas, 45134 Essen (DE); Sauer, Ralf, 52072 Aachen (DE)
(74) Vertreter: Müller, Enno, Dipl.-Ing.

(57) **Zusammenfassung**

Die Erfindung betrifft einen Haushalt-Staubsauger (1) mit einem Elektromotor (2) und einem an dem Staubsauger (1) angeordneten, mehrlagigen, luftdurchlässigen und nach Füllung zum Wegwerfen ausgelegten Filterbeutel (4) zur Aufnahme von aufgesaugtem Schmutz, wobei der Elektromotor (2) ein Sauggebläse antreibt, das einerseits den Schmutz durch eine Staubsaugerdüse (3) ansaugt und andererseits den Schmutz in den Filterbeutel (4) einbläst. Um einen Haushalt-Staubsauger der in Rede stehenden Art hinsichtlich einer verbesserten Handhabung in vorteilhafter Weise weiterzubilden, wird vorgeschlagen, dass der Filterbeutel (4) einen Teil der Außenwandung des Staubsaugers (1) bildet, wobei mindestens eine Lage (9) des Filterbeutels (4) selbsttragend ausgebildet ist.

## Beschreibung

Die Erfindung betrifft zunächst einen Haushalt-Staubsauger mit einem Elektromotor und einem an dem Staubsauger angeordneten, mehrlagigen, luftdurchlässigen und nach Füllung zum Wegwerfen ausgelegten Filterbeutel zur Aufnahme von aufgesaugtem Schmutz, wobei der Elektromotor ein Sauggebläse antreibt, das einerseits den Schmutz durch eine Staubsaugerdüse ansaugt und andererseits den Schmutz in den Filterbeutel einbläst.

Haushalt-Staubsauger der in Rede stehenden Art sind bekannt. Diese weisen zur Festlegung und Aufnahme des Filterbeutels eine starre oder auch textile Filterbeutelkammer auf. Um den Hygiene- und Allergikeransprüchen gerecht zu werden, ist es weiter bekannt, in dem Luftströmungsweg des Staubsaugers zusätzlich zum Filterbeutel weitere Filterelemente an verschiedenen Stellen im Gerät anzuordnen.

Im Hinblick auf den zuvor beschriebenen Stand der Technik wird eine technische Problematik der Erfindung darin gesehen, einen Haushalt-Staubsauger der in Rede stehenden Art insbesondere hinsichtlich einer verbesserten Handhabung in vorteilhafter Weise weiterzubilden.

Diese Problematik ist zunächst durch den Gegenstand des Anspruches 1 gelöst, wobei darauf abgestellt ist, dass der Filterbeutel einen Teil der Außenwandung des Staubsaugers bildet, wobei mindestens eine Lage des Filterbeutels selbsttragend ausgebildet ist. Zufolge dieser erfindungsgemäßen Ausgestaltung ist ein Staubsauger geschaffen, welcher sich gegenüber einem vergleichbaren Staubsauger mit, den Filterbeutel aufnehmender Filterkammer durch eine deutliche Gewichtsreduktion bei kompakter Bauform und schlankem Design auszeichnet. Durch die selbsttragende Ausbildung mindestens einer Lage des Filterbeutels kann auf eine diesen aufnehmende, gegebenenfalls textile Filterkammer verzichtet werden. Darüber hinaus ergeben sich Vorteile hinsichtlich des Wechselns des direkt an dem Motorgehäuse des Staubsaugers angeschlossenen Filterbeutels. Durch die mehrlagige Ausbildung des Filterbeutels ist darüber hinaus ein System geschaffen, welches mit nur einem Filter, nämlich dem endständig hinsichtlich des Luftströmungsweges angeordneten Filterbeutels zur kompletten Filtration aller relevanten Stoffe, wie Grobstaub, Feinstaub, Allergene, Pilzsporen, Bakterien, Motoremissionen, Geruch usw. auskommt. Hierzu sind unterschiedliche, in Strömrichtung der Filterwandung aufeinander folgende Filterlagen vorgesehen. Dementsprechend braucht der Benutzer nicht auf verschiedene Wechselintervalle mehrerer in dem Staubsauger angeordneter Filter zu achten. Vielmehr wird bei einem üblichen Filterbeutelwechsel das gesamte Filtersystem des Staubsaugers erneuert. So kann weiter vorgesehen sein, dass in dem Filterbeutel, bspw. in Form einer Beutellage Aktivkohle angeordnet ist. Bevorzugt wird diesbezüglich eine lose Anordnung von Aktivkohlegranulat in dem Filterbeutel. Diesbezüglich wird auf die DE 100 30 958 A1 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen. So kann das Adsorbens unmittelbar in dem Staubsammelraum des Filterbeutels in loser Form oder auch in einer eigenen, luftdurchlässigen Umhüllung angeordnet sein. Diesbezüglich werden Aktivkohlefasern mit einem Faserdurchmesser von 0,01 bis 0,1 mm und einer Faserlänge von 10 bis 100 mm oder Aktivkohlepulver mit einer Korngrößenfraktion zwischen 0,15 und 0,25 bevorzugt. Des Weiteren ergibt sich durch die erfindungsgemäße, freiliegende Anordnung des Filterbeutels an dem Staubsauger der Vorteil einer für den Benutzer erleichterten Füllstandskontrolle. So kann der Füllstand unmittelbar an dem freiliegenden, endständig angeordneten Filterbeutel abgelesen werden. In einer Weiterbildung des Erfindungsgegenstandes ist bei einem Staubsauger der in Rede stehenden Art, wobei der Filterbeutel eine Halteplatte aufweist, vorgesehen, dass die Halteplatte eine Kunststoffplatte ist. Diese weist die nötige Stabilität zum direkten Anschluss des Filterbeutels an dem Staubsauger bzw. an dessen Motorgehäuse auf. So kann die Festlegung des Filterbeutels in einfachster Weise durch eine Klemmhalterung auf dem Motorgehäuse erreicht sein, welche Klemmhalterung auf die Halteplatte einwirkt. Auch wird vorgeschlagen, dass alle Lagen des Filterbeutels zumindest teilweise aus Kunststofffasern bestehen. Möglich ist auch eine Kombination mit einer Papier-Zwischenlage. Demzufolge kann der Beutel an der bevorzugt aus Kunststoff hergestellten Halteplatte angeschweißt sein. Des Weiteren ergibt sich hieraus der vorteilhafte Effekt, dass durch partielles Anschmelzen eine Verhaftung der Lagen untereinander erreicht wird, so dass die selbsttragend ausgebildete Lage des Filterbeutels die weiteren Lagen mitträgt und somit den Filterbeutel in einer vorbestimmten Form hält. Die Kunststofffasern können bspw. Melt-Blown-, Spitfibre- oder auch Bicomponent-Fasern sein, die thermisch, chemisch oder mechanisch miteinander vernetzt sind. Die einzelnen Lagen können darüber hinaus miteinander laminiert sein. Dadurch bedingt, dass durch die erfindungsgemäße Ausgestaltung des Filterbeutels und dessen direkte, freiliegende Anordnung an dem Staubsauger eine diesen aufnehmende Filterkammer entfällt, resultiert ein weiterer vorteilhafter Effekt, indem der Staubsauger durch unterschiedlich große Filterbeutel in seiner Außenkontur unterschiedlich gestaltbar ist. So können in einfachster Weise den Gegebenheiten angepasst verschiedene Filterbeutelgrößen angeordnet werden. Auch die Anordnung verschiedener Filterbeutel mit unterschiedlichen Filterqualitäten ist denkbar. Zufolge dieser Ausgestaltung ist eine an ein übliches Wechselintervall angepasste Filterbeutelgröße wählbar, so dass nicht, wie bei der üblichen Anordnung stets gleich großer Filterbeutel üblich, der Wechselintervall, bspw. bei Verwendung des Staubsaugers in kleineren Wohnungen, zwischen zwei und drei Monaten und bei größeren Wohnungen oder im gewerblichen Bereich bei ein bis zwei Tagen liegt, was einerseits bei zu langen Wechselintervallen unter hygienischen Gesichtspunkten kritisch zu bewerten ist und andererseits bei sehr kurzen Wechselintervallen hinsichtlich der Handhabung nicht erwünscht ist. So würde bspw. beim Einsatz des Staubsaugers in kleineren Wohnungen ein entsprechend kleinerer Filterbeutel angeordnet werden. Hingegen könnte bei einem Einsatz in bspw. gewerblichen Räumen ein Filterbeutel mit einem letzterem gegenüber vielfachen Volumen Anwendung finden. Als besonders vorteilhaft erweist sich eine Ausgestaltung, bei welcher nur die äußerste Lage des Filterbeutels als Stützschicht ausgebildet ist. Diese äußerste Lage übernimmt hierbei zugleich die Funktion einer Schutzlage gegen äußere mechanische Einflüsse. Hinsichtlich des Lagenaufbaus wird auf die DE 196 06 718 A1 verwiesen. Auch der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen. So kann eine erste, in Durchströmrichtung betrachtete innerste Lage aus einem Vlies mit sehr hoher Luftdurchlässigkeit bestehen, zur Rückhaltung von Grobschmutz und zum Verhindern des Aufbauens eines Filterkuchens auf der nachgeschalteten Filterlage. Diese nachgeschaltete Lage weist eine hohe Staubspeicherfähigkeit auf. Eine in Durchströmrichtung nachfolgende dritte Lage kann bspw. ein Feinfaservlies, wie ein elektrostatisch aufgeladenes Melt-Blown-Vlies sein. Die, die mechanische Festigkeit und somit die Stützschicht ausbildende äußerste Lage ist weiter bevorzugt im Spun-Bond-Verfahren hergestellt, zur Bildung eines Spinnvlieses. Des Weiteren ist auch denkbar, diese Stützlage des Filterbeutels elastisch auszuformen, so dass die Filterbeutel-Außenkontur anpassbar ist an das aufgenommene Staub-/Schmutzvolumen. Da erfindungsgemäß der Filterbeutel endständig, demnach das letzte Glied in einer möglichen Filterkette ist, ist weiter vorgesehen, dass der Filterbeutel einer HEPA-Klasse genügt, so mindestens H10, besser H11 oder H12, weiter bevorzugt H13. So ist vorgesehen, dass der Filterbeutel einen Abscheidegrad von mehr als 85%, bevorzugt mehr als 95%, weiter bevorzugt von mehr als 99,5%, darüber hinaus weiter bevorzugt von mehr als 99,95% bezogen auf den MPPS (Most Penetrating Particle Size) nach der Norm EN 1822 besitzt.

Die Erfindung betrifft des Weiteren ein Set von Filterbeuteln für einen bestimmten Haushalt-Staubsaugertyp. Um ein derartiges Set anzugeben, welches eine Anpassung auf verschiedene Gegebenheiten unter Berücksichtigung des üblichen Wechselintervalls bietet, werden Filterbeutel unterschiedlicher Größe vorgeschlagen. So kann bspw. ein Set zwei, drei, vier, fünf oder mehr unterschiedlich große Filterbeutel für denselben Haushalt-Staubsaugertyp beinhalten. Entsprechend kann nach Bedarf ein an ein übliches Wechselintervall angepasster Filterbeutel gewählt werden. Darüber hinaus besteht die Möglichkeit, die Filterbeutelgröße in Abhängigkeit von der bevorstehenden Reinigungsaufgabe zu wählen. Ist beispielsweise das Aufsaugen von leicht feuchten Substanzen vorgesehen, kann hierfür ein kleinerer Filterbeutel des Sets benutzt werden, um diesen nach Beendigung des Saugarbeit direkt zu entsorgen. Zum täglichen Saugen bspw. gewerblicher Räume hingegen wird ein auf ein übliches Wechselintervall angepasster größerer Filterbeutel des Sets genutzt. Als besonders vorteilhaft erweist sich hierbei ein Set von Filterbeuteln gemäß den Ansprüchen 1 bis 6. So wird bei einem erfindungsgemäßen Set, wobei ein Filterbeutel mehrlagig ausgebildet ist, vorgeschlagen, dass ein Filterbeutel des Filterbeutelsets zur Bildung eines Teils der Außenwandung des Staubsaugers mindestens eine selbsttragende Lage aufweist. Zufolge dieser erfindungsgemäßen Ausgestaltung ist ein Filterbeutelset geschaffen, welches gegenüber vergleichbaren Staubsauger/Filterbeutelkombinationen, bei welchen der Filterbeutel in einer Filterkammer aufgenommen ist, zur deutlichen Gewichtsreduktion bei kompakter Bauform und schlanken Design des Staubsaugers beiträgt. Durch die selbsttragende Ausbildung mindestens einer Lage des Filterbeutels kann auf eine diesen aufnehmende, gegebenenfalls textile Filterkammer verzichtet werden. Darüber hinaus ergeben sich Vorteile hinsichtlich des Wechselns des direkt an dem Motorgehäuse des Staubsaugers angeschlossenen Filterbeutels, was weiter den Wechsel von Filterbeuteln innerhalb des erfindungsgemäßen Sets vereinfacht. In einer Weiterbildung des Erfindungsgegenstandes ist bei einem Set der in Rede stehenden Art, wobei ein Filterbeutel eine Halteplatte aufweist, vorgesehen, dass die Halteplatte eine Kunststoffplatte ist. Diese weist die nötige Stabilität zum direkten Anschluss des Filterbeutels an dem Staubsauger bzw. an dessen Motorgehäuse auf. So kann die Festlegung des Filterbeutels in einfachster Weise durch eine Klemmhalterung auf dem Motorgehäuse erreicht sein. Auch wird vorgeschlagen, dass alle Lagen eines Filterbeutels zumindest teilweise aus Kunststofffasern bestehen. Möglich ist auch eine Kombination mit einer Papier-Zwischenlage. Demzufolge kann der Beutel an der bevorzugt aus Kunststoff hergestellten Halteplatte angeschweißt sein. Des Weiteren ergibt sich hieraus der vorteilhafte Effekt, dass durch partielles Anschmelzen eine Verhaftung der Lagen untereinander erreicht wird, so dass die selbsttragend ausgebildete Lage eines Filterbeutels die weiteren Lagen mitträgt und somit den Filterbeutel in einer vorbestimmten Form hält. Als besonders vorteilhaft erweist sich eine Ausgestaltung, bei welcher nur die äußerste Lage eines Filterbeutels als Stützschicht ausgebildet ist. Diese äußerste Lage übernimmt hierbei zugleich die Funktion einer Schutzlage gegen äußere mechanische Einflüsse. Schließlich wird vorgeschlagen, dass ein Filterbeutel einen Abscheidegrad von mehr als 85%, bevorzugt mehr als 95%, weiter bevorzugt von mehr als 99,5%, darüber hinaus weiter bevorzugt von mehr als 99,95% nach der Norm EN 1822 besitzt, womit bevorzugt jeder Filterbeutel des Sets einer HEPA-Klasse genügt, mit mindestens H10, besser H11 oder H12, bevorzugt sogar H13.

Nachstehend ist die Erfindung anhand der beigefügten Zeichnungen, welche lediglich ein Ausführungsbeispiel darstellen, näher erläutert. Es zeigt:
- Fig. 1: einen erfindungsgemäßen Haushalt-Staubsauger in perspektivischer Darstellung;
- Fig. 2: in perspektivischer Einzeldarstellung einen Filterbeutel des Staubsaugers;
- Fig. 3: den stark vergrößerten Schnitt gemäß der Linie III-III in Fig. 2;
- Fig. 4: den an dem Motorgehäuse des Staubsaugers angeordneten Filterbeutel in Ansicht;
- Fig. 5: den Schnitt gemäß der Linie V-V in Fig. 4;
- Fig. 6: eine der Fig. 1 entsprechende perspektivische Darstellung des Staubsaugers, jedoch bei Anordnung eines gegenüber Fig. 1 größeren Filterbeutels;
- Fig. 7: in perspektivischer Darstellung ein Set von Filterbeuteln unterschiedlicher Größe für einen Staubsauger gemäß Fig. 1.

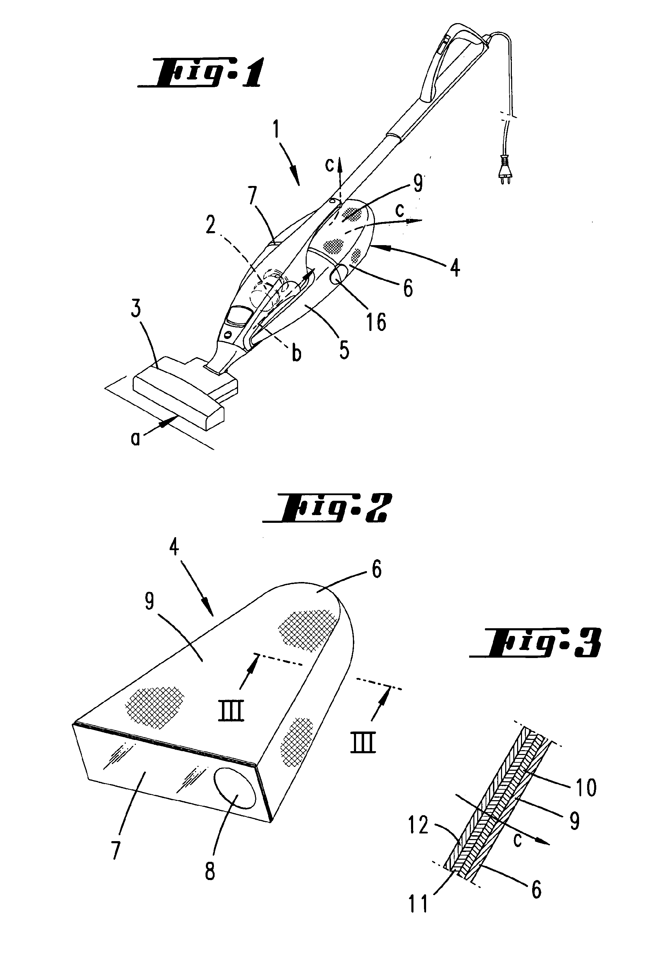

Dargestellt und beschrieben ist zunächst mit Bezug zu Fig. 1 ein Staubsauger 1, insbesondere ein Haushalt-Staubsauger mit einem nicht näher dargestellten Elektromotor 2, der ein Sauggebläse antreibt, welch letzteres einerseits den Schmutz durch eine Staubsaugerdüse 3 ansaugt (Pfeil a) und andererseits den Schmutz in einen an dem Staubsauger 1 angeordneten Filterbeutel 4 einbläst (Pfeil b).

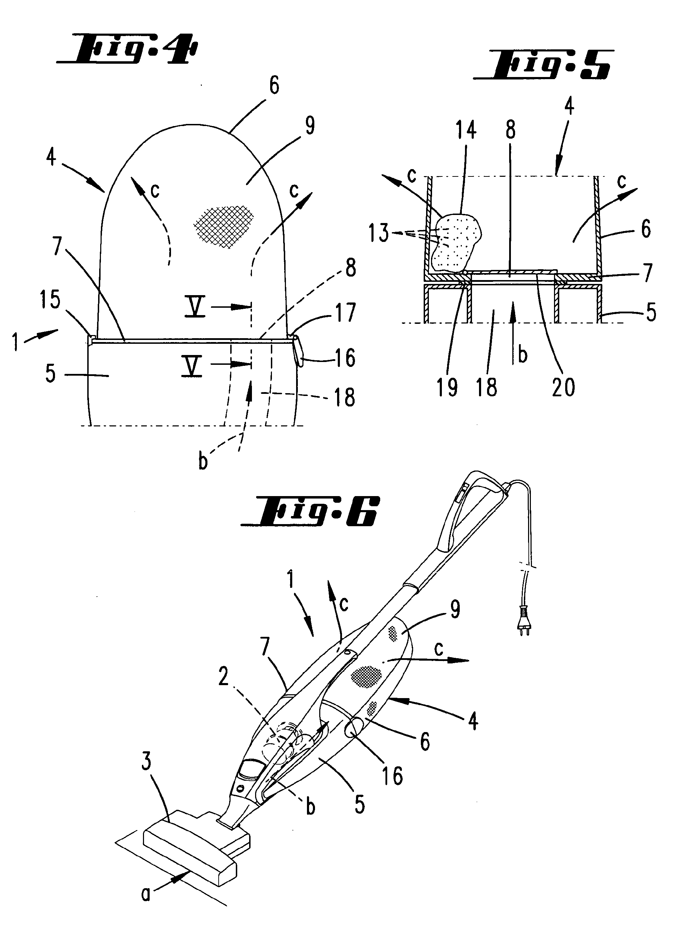

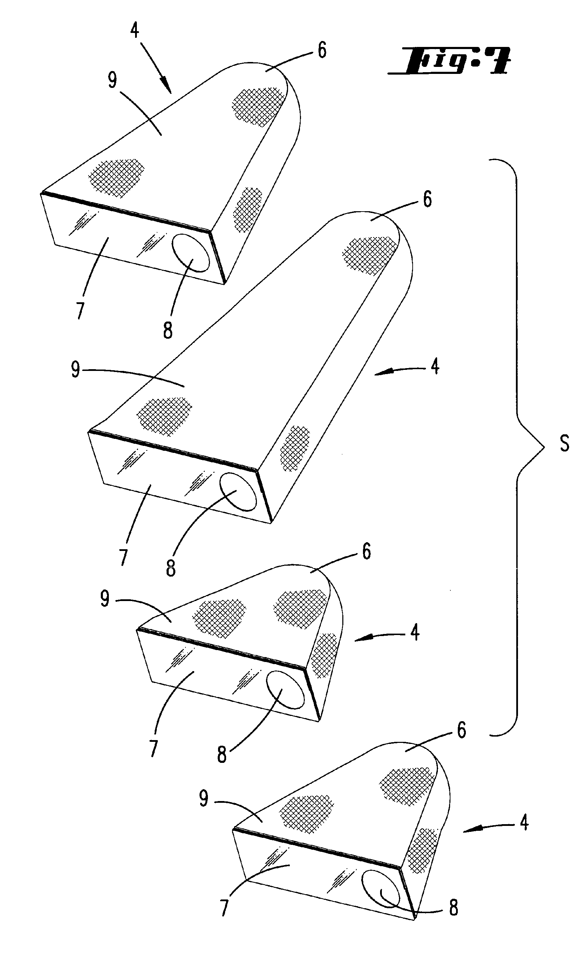

Der Filterbeutel 4 ist unmittelbar an dem Staubsauger 1 bzw. an dem, den Elektromotor 2 und das Sauggebläse beinhaltenden Motorgehäuse 5 angeordnet und bildet hierbei einen Teil der Außenwandung des Staubsaugers 1. Der nach Füllung zum Wegwerfen ausgelegte Filterbeutel 4 ist mehrlagig, wie in Fig. 3 dargestellt vierlagig, und luftdurchlässig ausgebildet, so dass der schmutzbeladene Luftstrom (Pfeil b) unter kompletter Filtration aller relevanten Schad-/Schmutzstoffe durch die Filterbeutelwandung 6 frei nach außen in die Umgebung austreten kann (Pfeil c).

Wie in der Einzeldarstellung in Fig. 2 zu erkennen, weist der Filterbeutel 4 eine Halteplatte 7 auf, welche in dem dargestellten Ausführungsbeispiel eine Kunststoffplatte ist. Diese ist mit einer Einfüllöffnung 8 versehen. An der Unterseite der Halteplatte 7 ist der Beutel, dessen Lagen zumindest teilweise aus Kunststofffasern bestehen, befestigt, so bspw. mit der Halteplatte 7 verschweißt.

Wie erwähnt, ist der Filterbeutel 4 bzw. dessen Beutelwandung 6 mehrlagig, bevorzugt vierlagig ausgebildet, wobei eine Lage selbsttragend ausgeformt ist. In dem dargestellten Ausführungsbeispiel ist dies die in Durchströmrichtung c äußerste Lage 9 (vergl. Fig. 3). Diese Stützlage 9 ist vorzugsweise aus einem Spun-Bond hergestellt. So ist eine relativ hohe mechanische Festigkeit zum Stützen des gesamten Filterbeutels 4 in einer vorbestimmten Form gegeben, so dass keine weiteren Maßnahmen zur Aufnahme und zum Schutz vor äußeren Einflüssen, wie bspw. durch Anordnung einer, den Filterbeutel aufnehmenden Kammer oder dergleichen notwendig sind.

Die in Durchströmrichtung c innenseitig der Stützlage 9 angeordneten weiteren Lagen dienen der Filtration, wobei den weiteren Lagen 10 bis 12 unterschiedliche Aufgaben zukommen. So handelt es sich bspw. bei der innersten Lage 12 um ein Vlies mit sehr hoher Luftdurchlässigkeit und relativ geringer Feinststaub-Abscheideleistung. Diese dient zum einen der Rückhaltung von Grobschmutz und zum anderen zur Verhinderung des Aufbaus eines Filterkuchens auf der nachgeschalteten Filterlage 11. Diese Lage 11 ist eine, bevorzugt zumindest teilweise aus Kunststofffasern bestehende Vlieslage mit einer hohen Staubspeicherfähigkeit, welcher Lage 11 in Durchströmrichtung c eine weitere Lage 10 nachgeschaltet ist. Diese besteht bevorzugt aus einem Feinfaservlies, wie ein elektrostatisch aufgeladenes Melt-Blown-Vlies. Die bereits erwähnte äußerste Lage 9 ist als reines Stützmedium ausgebildet und besteht aus einer Kunststoff-Wirrfaser-Anordnung. Die einzelnen Lagen 9 bis 12 sind bevorzugt untereinander verhaftet, bspw. laminiert.

Zur Geruchsadsorption ist des Weiteren im Filterbeutelinneren ein Aktivkohle-Granulat 13 vorgesehen, welches in loser Form vorhanden sein kann. Wie dargestellt, kann dieses Aktivkohle-Granulat auch in einer eigenen, luftdurchlässigen Umhüllung 14 innerhalb des Filterbeutels 4 vorhanden sein.

Zufolge der zuvor beschriebenen Ausgestaltung des Filterbeutels 4 übernimmt dieser die komplette Filtration aller relevanten Schadstoffe, so dass mit einem Austausch des Filterbeutels 4 zur Entsorgung desselben zugleich sämtliche Filter des Systems ausgetauscht werden.

Wie insbesondere aus den Fig. 4 und 5 zu erkennen, wird der Filterbeutel 4, wie bereits beschrieben, direkt an dem Motorgehäuse 5 angeordnet, wobei bspw. die Festlegung derart erfolgen kann, dass die Halteplatte 7 mit einem Schmalseitenbereich unter eine an dem Motorgehäuse 5 angeordnete Haltekante 15 tritt und die gegenüberliegende Schmalrandkante der Halteplatte 7 zur Verspannung derselben gegen das Motorgehäuse 5 von einem, mit einer Handhabe 16 versehenen Spannelement 17 überfangen wird.

Die Anordnung ist hierbei so gewählt, dass die Einfüllöffnung 8 der Halteplatte 7 einem motorgehäuseseitigen Strömungskanal 18 zugeordnet ist, wobei die Schnittstelle durch eine Ringdichtung 19 abgedichtet ist.

Die Einfüllöffnung 8 ist beutelinnenseitig von einer selbsttätig in eine Verschlussstellung bei einem Ausschalten des Staubsaugers sich verlagernden Verschlussklappe 20 überdeckt.

Die Beutelwandung 6 des Filterbeutels 4 bildet zufolge der vorbeschriebenen Ausgestaltungen einen Teil der Außenwandung des Staubsaugers 1 aus, wobei die Stützlage, bevorzugt die äußerste Lage 9 des Filterbeutels 4 diesen in Form hält. Zufolge dessen ist eine deutliche Gewichtsreduktion bei kompakter Bauform und schlankem Design erreicht. Darüber hinaus ist durch den freiliegenden Filterbeutel 4 auch eine vereinfachte Füllstandskontrolle durch den Benutzer erreicht.

Dadurch bedingt, dass der Filterbeutel 4 selbsttragend ausgebildet ist und somit keine diesen aufnehmende Kammer oder dergleichen benötigt wird, ist auch eine Variabilität hinsichtlich der Filterbeutelgröße in einfachster Weise erreicht. So kann das Beutelvolumen je nach Anforderung variieren. In Fig. 6 ist der Staubsauger 1 mit einem gegenüber der Konfiguration in Fig. 1 volumenmäßig vergrößerten Filterbeutel 4 versehen. Demzufolge ist je nach Anwendungsbereich des Staubsaugers ein an ein übliches Wechselintervallvolumen angepasster Filterbeutel 4 anordbar.

In Fig. 7 ist ein Set von Filterbeuteln 4 unterschiedlicher Größe dargestellt, welche mit gleichdimensionierten Halteplatten 7 versehen sind. Die Beutel der Filterbeutel 4 sind zumindest im Wesentlichen gleich aufgebaut und weisen einen Lagenaufbau gemäß Fig. 3 auf. Dementsprechend sind auch die Filterbeutel 4 des Sets S selbsttragend ausgeformt.

Die Filterbeutel 4 des Sets S können sich zudem neben der unterschiedlichen Beutelgröße auch durch alternativen Lagenaufbau und/oder durch verschiedene Mengen und/oder Arten von Absorptionsmaterial unterscheiden, so dass für die verschiedensten Staubsaugarbeiten entsprechend große und/oder entsprechende Filtereigenschaften aufweisende Filterbeutel vorliegen.

Wesentliche Merkmale dieses Sets S sind die selbsttragenden Lagen der Filterbeutel 4 zur Bildung eines Teils der Außenwandung des Staubsaugers 1, wobei bevorzugt die äußerste Lage als Stützschicht ausgebildet ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Haushalt-Staubsauger (1) mit einem Elektromotor (2) und einem an dem Staubsauger (1) angeordneten, mehrlagigen, luftdurchlässigen und nach Füllung zum Wegwerfen ausgelegten Filterbeutel (4) zur Aufnahme von aufgesaugtem Schmutz, wobei der Elektromotor (2) ein Sauggebläse antreibt, das einerseits den Schmutz durch eine Staubsaugerdüse (3) ansaugt und andererseits den Schmutz in den Filterbeutel (4) einbläst, **dadurch gekennzeichnet, dass** der Filterbeutel (4) einen Teil der Außenwandung des Staubsaugers (1) bildet, wobei mindestens eine Lage (9) des Filterbeutels (4) selbsttragend ausgebildet ist.

2. Haushalt-Staubsauger nach Anspruch 1 oder insbesondere danach, wobei der Filterbeutel (4) eine Halteplatte (7) aufweist, **dadurch gekennzeichnet, dass** die Halteplatte (7) eine Kunststoffplatte ist.

3. Haushalt-Staubsauger nach einem oder mehreren der vorhergehenden Ansprüche oder insbesondere danach, **dadurch gekennzeichnet, dass** alle Lagen (9 bis 12) des Filterbeutels (4) zumindest teilweise aus Kunststofffasern bestehen.

4. Haushalt-Staubsauger nach einem oder mehreren der vorhergehenden Ansprüche oder insbesondere danach, **dadurch gekennzeichnet, dass** der Staubsauger (1) durch unterschiedlich große Filterbeutel (4) in seiner Außenkontur unterschiedlich gestaltbar ist.

5. Haushalt-Staubsauger nach einem oder mehreren der vorhergehenden Ansprüche oder insbesondere danach, **dadurch gekennzeichnet, dass** nur die äußerste Lage (9) des Filterbeutels (4) als Stützschicht ausgebildet ist.

6. Haushalt-Staubsauger nach einem oder mehreren der vorhergehenden Ansprüche oder insbesondere danach, **dadurch gekennzeichnet, dass** der Filterbeutel (4) einen Abscheidegrad von mehr als 85%, bevorzugt mehr als 95%, weiter bevorzugt von mehr als 99,5%, darüber hinaus weiter bevorzugt von mehr als 99,95% nach der Norm EN 1822 besitzt.

7. Set (S) von Filterbeuteln (4) für einen bestimmten Haushalt-Staubsaugertyp, **gekennzeichnet durch** Filterbeutel (4) unterschiedlicher Größe.

8. Set nach Anspruch 7 oder insbesondere danach, wobei ein Filterbeutel (4) mehrlagig ausgebildet ist, **dadurch gekennzeichnet, dass** ein Filterbeutel (4) des Filterbeutelsets (S) zur Bildung eines Teils der Außenwandung des Staubsaugers (1) mindestens eine selbsttragende Lage (9) aufweist.

9. Set nach einem oder mehreren der Ansprüche 7 bis 8 oder insbesondere danach, wobei ein Filterbeutel (4) eine Halteplatte (7) aufweist, **dadurch gekennzeichnet, dass** die Halteplatte (7) eine Kunststoffplatte ist.

10. Set nach einem oder mehreren der Ansprüche 7 bis 9 oder insbesondere danach, **dadurch gekennzeichnet, dass** alle Lagen (9 bis 12) eines Filterbeutels (4) zumindest teilweise aus Kunststofffasern bestehen.

11. Set nach einem oder mehreren der Ansprüche 7 bis 10 oder insbesondere danach, **dadurch gekennzeichnet, dass** nur die äußerste Lage (9) eines Filterbeutels (4) als Stützschicht ausgebildet ist.

12. Set nach einem oder mehreren der Ansprüche 7 bis 11 oder insbesondere danach, **dadurch gekennzeichnet, dass** ein Filterbeutel (4) einen Abscheidegrad von mehr 85%, bevorzugt mehr als 95%, weiter bevorzugt von mehr als 99,5%, darüber hinaus weiter bevorzugt von mehr als 99,95% nach der Norm EN 1822 besitzt.
